# EUROPÄISCHE PATENTANMELDUNG

(11) **EP 4 528 318 A1**
(43) Veröffentlichungstag der Anmeldung: **26.03.2025**
(21) Anmeldenummer: 24198174.5
(22) Anmeldetag: 03.09.2024
(51) Int. Cl.: G01S 7/40, G01S 7/41, G01S 13/04, G01S 13/56, G01S 13/88, B60R 25/20, E05F 15/73

(54) **VORRICHTUNG UND VERFAHREN ZUR ERFASSUNG VON BETÄTIGUNGEN AN KRAFTFAHRZEUGEN**

(30) Priorität: 19.09.2023 DE 102023125308
(71) Anmelder: HUF Hülsbeck & Fürst GmbH & Co. KG, 42551 Velbert (DE)
(72) Erfinder: WEHNER Dr., Philipp, 45879 Gelsenkirchen (DE); SCHINDLER, Mirko, 42549 Velbert (DE); LEIB, Steffen, 40885 Ratingen (DE)
(74) Vertreter: Zenz Patentanwälte Partnerschaft mbB

(57) **Zusammenfassung**

Vorrichtung zur Erfassung von Bedienhandlungen einer Bedienperson an einem Kraftfahrzeug (1), wobei die Vorrichtung zur Montage an einem Fahrzeug ausgebildet ist, mit wenigstens einer Sensoranordnung, die wenigstens einen Radarsensor (5) aufweist.

Eine Auswerteeinrichtung ist dazu ausgebildet, Signale des wenigstens einen Radarsensors (5) zu erfassen und in Abhängigkeit von einer Auswertung der Signale ein Bediensignal an einem Signalausgang auszugeben. Die Auswerteeinrichtung ist dazu ausgebildet, aus mehreren Signalen des Radarsensors (5) der Sensoranordnung einen Referenzwert zu erzeugen und zu speichern.

Die Auswerteeinrichtung ist ferner dazu ausgebildet, bei einer Auswertung der Signale des Radarsensors (5) der Sensoranordnung in Abhängigkeit von einer Abweichung der Signale des Radarsensors von einem der gespeicherten Referenzwerte ein Ansteuersignal zu erzeugen.

## Beschreibung

Die Erfindung betrifft eine Vorrichtung und ein zugehöriges Verfahren zur Erfassung von Bedienhandlungen an Kraftfahrzeugen. Die Vorrichtung ist zur Anordnung an einem Fahrzeug ausgebildet und weist wenigstens eine Sensoranordnung auf, die ihrerseits wenigstens einen Radarsensor aufweist. In einer Auswerteeinrichtung werden Signale des Radarsensors erfasst und in Abhängigkeit von einer durchgeführten Auswertung der Signale wird an einem Signalausgang ein Betätigungssignal ausgegeben. Die Auswertung der Signale des Radarsensors kann insbesondere Wertvergleiche oder zeitliche Verläufe der Signale umfassen, wobei eine Betätigung dann erkannt wird, wenn sich die Signale des Radarsensors in charakteristischer Weise ändern.

Radarsensoren werden als Sensoren an Kraftfahrzeugen an verschiedenen Stellen eingesetzt, z.B. in sicherheitsrelevanten Assistenzsystemen, die die Annäherung anderer Fahrzeuge oder Fußgänger oder Objekte erkennen. Die Sensoren senden elektromagnetische Wellen aus, wobei verschiedene Auswerteverfahren die Reflexionen der ausgesendeten Signale erfassen und aus der Laufzeit zwischen Sendung und Empfang auf die Entfernung eines im Strahlungsbereich befindlichen Objektes schließen. Die verschiedenen Auswerteverfahren sind bekannt und werden hier nicht diskutiert, da im Rahmen der Erfindung prinzipiell beliebige Radarsensoren eingesetzt werden können.

Der Einsatz von Radarsensoren zur Erfassung von Betätigungen beruht ebenfalls auf der Detektion einer Abstandsänderung zwischen dem Sensor und beleuchteten Objekten. Bewegt eine Bedienperson beispielsweise ihre Hand oder ihren Fuß durch die Strahlkeule eines Radarsensors, so verändert sie damit die Umgebung des Radarsensors und die Laufzeiten der Signale des Radarsensors. Sowohl bestimmte Abstände als auch die zeitlichen Verläufe der Abstandsänderung können den Bedienwünschen eines Benutzers zugeordnet werden, so dass mit solchen Sensoren eine zuverlässige Erfassung von Fahrzeugbedienungen möglich ist.

Dennoch führt auch die Erfassung mit solchen an sich zuverlässigen Sensoren gelegentlich zu fehlerhaften Erfassungen. Aufgabe der Erfindung ist es, Erfassungseinrichtungen mit Radarsensoren hinsichtlich der Erkennung von Bedienwünschen robuster zu gestalten.

Diese Aufgabe wird durch eine Vorrichtung und ein Verfahren gemäß den unabhängigen Patentansprüchen gelöst.

Erfindungsgemäß ist die Vorrichtung mit einer Auswerteeinrichtung ausgestattet, die derart ausgebildet ist, dass aus einer Vielzahl von Signalen des Radarsensors der Sensoranordnung wiederholt ein Referenzwert erzeugt und gespeichert wird. Ferner ist die Auswerteeinrichtung dazu ausgebildet, bei der Auswertung der Signale des Radarsensors der Sensoranordnung in Abhängigkeit von einer Abweichung der Signale des Radarsensors von einem gespeicherten Referenzwert ein Bediensignal zu erzeugen.

Um die Wahrscheinlichkeit einer Fehlerkennung zu verringern, ist erfindungsgemäß vorgesehen, dass ein oder mehrere Referenzwerte gespeichert sind, die bei der Auswertung des aktuellen Signals des Radarsensors herangezogen werden. Unter einem Referenzwert wird hierbei jeder Wert verstanden, der aus den tatsächlich gemessenen Signalen des Radarsensors im eingebauten Zustand ermittelt wird. Um den Referenzwert zu bestimmen, können z.B. mehrere, in zeitlichem Abstand gemessene Signale des Radarsensors durch Rechenoperationen in einen Referenzwert überführt werden, z.B. gemittelt werden.

Die Auswertung der Signale des Radarsensors erfolgt unter Berücksichtigung des gespeicherten Referenzwertes oder mehrerer gespeicherter Referenzwerte.

Ein Referenzwert aus den Signalen des Radarsensors kann zeitgesteuert und/oder ereignisgesteuert ermittelt werden. Beispielsweise kann die Auswerteeinrichtung den Referenzwert in vorgegebenen Zeitabständen aus den Signalen des Radarsensors erzeugen. Darüber hinaus können Ereignisse, die von der Auswerteeinrichtung erfasst oder ihr durch Signale mitgeteilt werden, die Generierung von Referenzwerten aus den aktuellen Signalen des Radarsensors auslösen oder triggern.

Die Berücksichtigung eines Referenzwertes bei der Auswertung der Signale des Radarsensors ermöglicht es, Veränderungen, die z.B. durch Umgebungsbedingungen, Klima, Alterung oder Zustand hervorgerufen werden, bei der Auswertung der Sensorsignale zu berücksichtigen. Durch eine zeitlich wiederholte Erzeugung von Referenzwerten können Veränderungen der Umgebung oder auch Alterungsprozesse des Sensors berücksichtigt werden. Eine ereignisgesteuerte Referenzwerterzeugung kann dazu beitragen, eine Art Kalibrierung des Radarsensors bereitzustellen, nachdem sich ein Zustand des Fahrzeugs oder der zugeordneten Einrichtung geändert hat. Dies wird im Folgenden näher erläutert.

Der Referenzwert kann z.B. aus den Signalwerten erzeugt werden, indem ein permanent anliegendes Grundsignal als Referenzwert bestimmt wird. Der Referenzwert kann aber auch andere Aussagen über die Signale des Radarsensors enthalten, beispielsweise Aussagen über die zeitliche Variabilität der Signale des Radarsensors. Beispielsweise kann die Auswerteeinrichtung das zeitliche Verhalten der Signaländerungen auswerten, um die aktuelle Ansprechzeit der Radarsensoren zu erfassen. Werden mehrere Radarsensoren von derselben Auswerteeinrichtung ausgewertet, kann für jeden der Sensoren ein zugeordneter Referenzwert gespeichert werden. Es können aber auch Referenzwerte erzeugt und gespeichert werden, die sich aus der gemeinsamen Auswertung der Signale mehrerer Radarsensoren ergeben.

Die Speicherung des Referenzwertes kann in einem internen Speicher der Auswerteeinrichtung, insbesondere einem nichtflüchtigen Speicher, erfolgen.

Vorzugsweise wird der Referenzwert als einfacher Offsetwert bei der Auswertung der Signale des Radarsensors der Sensoranordnung berücksichtigt. Die Berücksichtigung eines Offsets bei der Auswertung von Messsignalen ist ein bekanntes Verfahren, um Einflüsse des Messsystems selbst oder Einflüsse der Umgebung von den relevanten Ereignissignalen zu trennen. Dazu wird bei der Signalauswertung durch eine einfache Rechenoperation ein Offsetwert von den Messsignalen subtrahiert bzw. addiert. Durch eine Offset-Kompensation können insbesondere Umgebungseinflüsse mit schnellen und einfachen Rechenoperationen eliminiert werden.

Bei einer bevorzugten Ausgestaltung der Erfindung wird der Referenzwert für jeden Radarsensor aus mehreren zeitlich nacheinander erfassten Signalen des Radarsensors erzeugt, insbesondere durch Mittelung oder gewichtete Mittelung. Die zeitlich nacheinander erfassten Signale können unmittelbar hintereinander oder in vorgegebenen Zeitabständen, z.B. in Abständen von wenigen Sekunden (z.B. bis zu zehn Sekunden), erfasst werden. In welchen zeitlichen Abständen die Signale erfasst werden, kann durch fest hinterlegte Zeitwerte vorgegeben werden. Alternativ können die Zeitabstände von der Auswerteeinrichtung selbst bestimmt werden, wobei die Zeitabstände kleiner gewählt werden, wenn die Signale des Radarsensors über einen vorgegebenen Zeitraum starke Schwankungen aufweisen oder z.B. die Standardabweichung über eine Anzahl von zuletzt erfassten Signalwerten des Radarsensors einen Schwellwert überschreitet.

Die gewichtete Mittelung kann derart erfolgen, dass zeitlich früher erfasste Signale des Radarsensors gegenüber zeitlich später erfassten Signalen geringer gewichtet werden.

In einer besonders bevorzugten Ausführungsform der Erfindung wird durch die Auswerteeinrichtung periodisch oder kontinuierlich ein Referenzwert als gleitender Mittelwert der Sensorsignale des Radarsensors erzeugt.

Gemäß dieser Ausführungsform ist die Auswerteeinrichtung dazu ausgebildet, im Betrieb die vorgenannte Mittelwertbildung nicht nur auf Anforderung oder auf eine Triggerung hin, sondern permanent durchzuführen. Damit steht zu jedem Zeitpunkt ein aktueller Referenzwertsatz oder ein aktueller einzelner Referenzwert für jeden der Radarsensoren zur Verfügung, der eine Korrektur eines Signals bei der Auswertung einer Aktivität ermöglicht.

In einer besonders bevorzugten Ausgestaltung der Erfindung ist die Vorrichtung zur Anordnung und Montage an einem Fahrzeug ausgebildet und hierzu beispielsweise mit Kopplungsmitteln oder Haltemitteln ausgestattet. Dabei ist die Vorrichtung derart ausgebildet, dass sie an einem Fahrzeug anbringbar ist, so dass nach dem Anbringen an dem Fahrzeug der wenigstens eine Radarsensor auf den Boden des Fahrzeugs gerichtet ist.

Eine solche Vorrichtung kann insbesondere zur Überwachung des Bereichs in der unmittelbaren Fahrzeugperipherie oder unter dem Fahrzeug entlang des Fahrzeugumfangs eingesetzt werden. Solche Einrichtungen werden insbesondere bei fußbetätigten Heckklappen (Kick-Sensoren) eingesetzt. Bei diesen Einrichtungen kann sich ein Benutzer, der ein Authentifizierungsmittel (Fahrzeugschlüssel oder ein anderes Identifizierungsmittel) mit sich führt, dem Heck des Fahrzeugs nähern, um seinen Fuß in einen Erfassungsbereich zu bewegen und dadurch das Öffnen der Heckklappe auszulösen. In einer solchen Anordnung erfassen die Radarsensoren grundsätzlich den Abstand zum Fahrzeugboden, erst wenn sich ein Objekt, z.B. der Fuß eines Bediensteten, zwischen Boden und Radarsensor bewegt, wird der erfasste Abstand verkürzt und die Auswerteeinrichtung kann in Abhängigkeit von der Art, der Geschwindigkeit und der Stärke der Signaländerung eine Betätigung erkennen.

Insbesondere in dieser Ausgestaltung kommt die Erfindung vorteilhaft zur Geltung, da die Untergründe eines Fahrzeuges sehr variabel sind. Befestigte, also z.B. asphaltierte oder auch geteerte Untergründe reflektieren die Radarstrahlung anders als unbefestigte Wege oder Bewuchs. Auch Pfützen oder nasse Untergründe sowie Schneeoberflächen beeinflussen die Reflexion der Radarstrahlung. Die Erfindung stellt sicher, dass Referenzwerte für unterschiedliche Untergründe situationsgerecht erfasst werden können. Anhand dieser Referenzwerte, die den Untergrund in einer Nullmessung, also ohne Betätigung, erfassen, kann dann eine tatsächliche Betätigung besser von einem Artefakt oder einer Fehldetektion unterschieden werden.

Besonders bevorzugt ist es, wenn die Auswerteeinrichtung einen Signaleingang aufweist, der für den Betriebszustand eines zugeordneten Fahrzeugs charakteristische Signale anzeigt. Die Auswerteeinrichtung kann dann in Abhängigkeit des Betriebszustandssignals Referenzwerte erzeugen.

Ist die Auswerteeinrichtung beispielsweise an ein Bussystem des Fahrzeugs angeschlossen, können Signale bezüglich des Betriebszustandssignals (Motor ein/aus, Bewegungszustand, Geschwindigkeit, Verriegelung, Gangwahl usw.) von der Auswerteeinrichtung berücksichtigt werden.

Insbesondere bei einer Änderung des Betriebszustandes kann eine erneute Generierung von Referenzwerten ausgelöst werden. Beispielsweise kann eine Generierung von Referenzwerten erfolgen, wenn ein Fahrzeug gestartet wird und in den Fahrzustand übergeht. Wenn die Geschwindigkeit des Fahrzeugs beispielsweise Geschwindigkeiten von mehr als 70 km/h anzeigt, kann die Auswerteeinrichtung auch im Fahrbetrieb einen Referenzwert erfassen, da dann davon auszugehen ist, dass es sich bei dem Untergrund um einen befestigten Untergrund mit repräsentativen Abständen zwischen Fahrzeug und Untergrund handelt.

In einer Weiterbildung der Erfindung ist die Auswerteeinrichtung dazu ausgebildet, einen Referenzwert zu erzeugen, wenn das Betriebszustandssignal ein zum Stillstand gekommenes Fahrzeug anzeigt.

Immer dann, wenn ein Stillstand des Fahrzeugs signalisiert wird, kann für die Auswerteeinrichtung davon ausgegangen werden, dass grundsätzlich eine Aktivierung der Radarsensoren zu erwarten ist, insbesondere wenn diese beispielsweise zum Öffnen der Heckklappe angeordnet sind. Das Abstellen kann z. B. durch eine Geschwindigkeitserkennung, durch die Erkennung einer Motorabschaltung, durch eine Bremserkennung oder durch eine Gangwahl in Parkstellung erkannt werden. Erfolgt nach dem Abstellen des Fahrzeugs tatsächlich eine Betätigung der Radarsensoren durch einen Benutzer, so liegt zu diesem Zeitpunkt ein aktueller repräsentativer Referenzwert vor, da die Auswerteeinrichtung bereits bei der Erkennung des Abstellens des Fahrzeugs die Signale der Radarsensoren erfasst und daraus Referenzwerte abgeleitet und gespeichert hat.

Bei dem erfindungsgemäßen Verfahren wird zur Erfassung von Bedienhandlungen durch eine bedienende Person mit mindestens einem Radarsensor ein Signal erfasst. Das Radarsignal wird ausgewertet und wenn das Radarsignal vorgegebene Kriterien erfüllt, wird ein Betätigungssignal an eine Fahrzeugsteuerung ausgegeben. Gemäß dem erfindungsgemäßen Verfahren wird aus einer Vielzahl von Signalen jedes Radarsensors wiederholt oder getriggert ein Referenzwert erzeugt und gespeichert. Der gespeicherte Referenzwert wird bei der Auswertung der Signale und dem Vergleich mit den vorgegebenen Kriterien berücksichtigt. Für das erfindungsgemäße Verfahren gilt sinngemäß das oben für die Vorrichtung Ausgeführte. Es wird daher auf die obigen Ausführungen verwiesen, die sämtlich auch für das erfindungsgemäße Verfahren gelten.

Die Erfindung wird nun anhand der beigefügten Zeichnung näher erläutert.
Figur 1a zeigt schematisch die Anordnung einer erfindungsgemäßen Vorrichtung zur Durchführung eines erfindungsgemäßen Verfahrens, wobei das Fahrzeug auf einer ersten Art von Untergrund steht;
Figur 1b zeigt schematisch die Anordnung einer erfindungsgemäßen Vorrichtung zur Durchführung eines erfindungsgemäßen Verfahrens, wobei das Fahrzeug auf einer zweiten Art von Untergrund steht;
Figur 2 zeigt ein Ablaufdiagramm eines Ausführungsbeispiels des erfindungsgemäßen Verfahrens mit einer erfindungsgemäßen Vorrichtung;

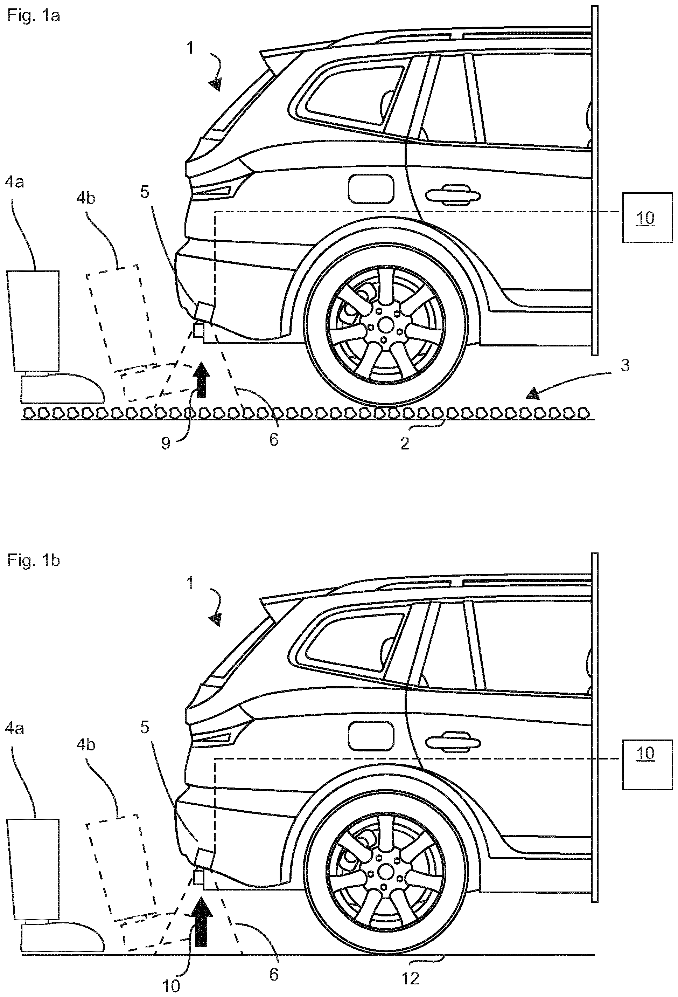

Figur 1a zeigt in einer schematischen Seitenansicht ein Fahrzeug 1, das auf einem Untergrund 2 steht. Auf dem Untergrund 2 befindet sich ein Belag 3, der in diesem Beispiel aus einer Vielzahl von Gesteinsbrocken (Gesteinssplitt) besteht. Am Heck des Fahrzeugs 1 ist an der Innenseite eines Stoßfängers des Fahrzeugs 1 eine erfindungsgemäße Vorrichtung 5 angeordnet. Die erfindungsgemäße Vorrichtung 5 weist wenigstens einen Radarsensor auf, wobei in der erfindungsgemäßen Vorrichtung 5 auch mehrere Radarsensoren aufgenommen sein können. Der mindestens eine Radarsensor ist mit seiner Strahlkeule 6 auf den Untergrund 2 gerichtet. Die erfindungsgemäße Vorrichtung 5 ist über eine Signalleitung mit einer zentralen Steuereinrichtung 10 gekoppelt. Von der erfindungsgemäßen Vorrichtung 5 ausgegebene Bediensignale werden an die zentrale Steuereinrichtung 10 des Fahrzeugs 1 ausgegeben.

In dieser beispielhaften Darstellung ist ein Unterschenkel einer Bedienperson in einer passiven Position 4a und einer aktiven Position 4b dargestellt. Wenn die bedienende Person ihren Unterschenkel von der passiven Position 4a in die aktive Position 4b bewegt, wird dadurch ein Teil des Unterschenkels bzw. des Fußes in die Strahlkeule 6 des Radarsensors der erfindungsgemäßen Vorrichtung 5 bewegt und der Radarsensor erfasst eine Abstandsänderung, die einer Bedienung zugeordnet werden kann.

In der erfindungsgemäßen Vorrichtung 5 werden dazu die Signale des wenigstens einen Radarsensors kontinuierlich überwacht und wenn die Abstandssignale eine charakteristische Änderung aufweisen, wird auf eine Bedienung durch einen Benutzer geschlossen. Die charakteristische Änderung kann dabei eine absolute Signaländerung, also eine Schwellwertüberschreitung sein, es kann aber auch eine komplexere Auswertung von Zeitverläufen erfolgen. Wird eine Betätigung erkannt, gibt die erfindungsgemäße Vorrichtung 5 ein Betätigungssignal an die zentrale Steuereinrichtung 10 aus.

Um eine Betätigung zuverlässig zu erkennen, sieht die Erfindung vor, auf Basis der Signalwerte des wenigstens einen Radarsensors Referenzwerte zu generieren. In den Figuren 1a und 1b sind hierzu verschiedene Situationen dargestellt, die sich hinsichtlich der Beschaffenheit des Untergrunds unterscheiden. In Figur 1a steht das Fahrzeug auf einem Untergrund 2, der mit Gesteinsbrocken 3 bedeckt ist, während in Figur 1b ein betonierter Untergrund 12 ohne weiteren Belag dargestellt ist.

Die Pfeile 9 und 10 zeigen durch ihre unterschiedliche Größe an, dass die Radarsignale in der Situation der Abbildung 1a aufgrund der Struktur der Oberfläche anders reflektiert werden als in der Situation der Abbildung 1b, in der eine einheitliche, weitgehend unstrukturierte Oberfläche 12 vorliegt. In dieser beispielhaften Darstellung ist das reflektierte Signal in Abbildung 1a schwächer als in Abbildung 1b. Diese Betrachtung bezieht sich auf den unbedienten Zustand, d.h. den Zustand, in dem keine Bedienhandlung durch Bewegung eines Körperteils des Bedieners in die Strahlkeule 6 erfolgt.

Erfindungsgemäß werden Referenzwerte im unbedienten Zustand erfasst, wobei die Signale des Radarsensors in der erfindungsgemäßen Vorrichtung 5 beispielsweise durch eine gleitende Mittelwertbildung kontinuierlich angepasst werden. In einem solchen Fall erfasst die erfindungsgemäße Vorrichtung 5 die Signale des Radarsensors wiederholt in zeitlichen Abständen und speichert sie als Referenzwert ab. Die Referenzwerte der Situation in Figur 1a werden sich von den Referenzwerten in Figur 1b unterscheiden, da die Untergründe bzw. die Beläge auf den Untergründen unterschiedlich sind. Wenn nun ein Benutzer seinen Fuß oder Unterschenkel in die Strahlkeule 6 bewegt, verfügt die erfindungsgemäße Vorrichtung 5 über gespeicherte Referenzwerte, die eine zuverlässige Unterscheidung zwischen einem Bedienereignis und einer Fehlerkennung ermöglichen. Die Referenzwerte liefern einen Basiswert oder einen Offset, welcher bei der Auswertung der Signale des Radarsensors berücksichtigt werden.

Wie erläutert, können die Referenzwerte durch Mittelung einer zeitlichen Abfolge von Signalen des wenigstens einen Radarsensors erzeugt werden, wobei die Mittelung auch eine gewichtete Mittelung sein kann. Alternativ oder zusätzlich kann die Erzeugung der Referenzwerte auch ereignisabhängig ausgelöst werden, beispielsweise wenn das Fahrzeug anhält oder wenn ein Fahrzeugzugangssystem erkennt, dass sich ein Bediener mit einem drahtlosen Funkschlüssel oder einem anderen Identifikationsgeber dem Fahrzeug nähert.

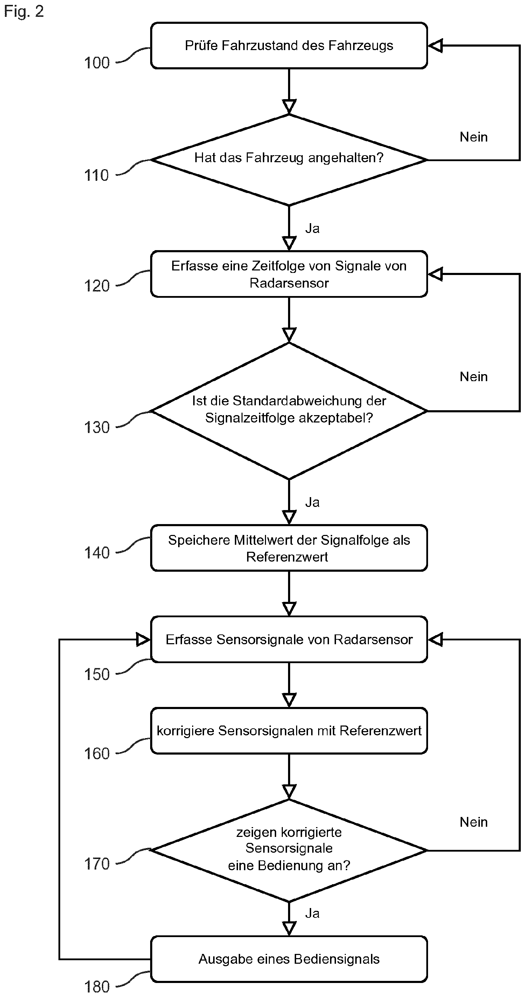

In Figur 2 ist ein beispielhaftes Verfahren in Form eines Ablaufdiagramms dargestellt, das von einem Prozessor in einer erfindungsgemäßen Vorrichtung 5 ausgeführt werden kann. Das Verfahren kann jedoch auch mit verteilten Verarbeitungsschritten in verschiedenen Komponenten des Fahrzeugs ausgeführt werden.

In Schritt 100 wird der Fahrzustand des Fahrzeugs anhand eines Signals überprüft, das von einer zentralen Steuereinrichtung 10 des Fahrzeugs erhalten wird (z.B. über den Fahrzeugbus). Anhand des Signals wird ermittelt, ob das Fahrzeug nach vorangehender Fahrt zum Stillstand gekommen ist. Dies kann beispielsweise aufgrund eines Abstellens des Fahrzeugmotors oder einer Betätigung des Gangwahlhebels in die Stellung P erfolgen.

Wird in Schritt 110 festgestellt, dass das Fahrzeug nicht abgestellt wurde, sondern z.B. nur angehalten hat, wird zu Schritt 100 zurückgekehrt. Wird hingegen festgestellt, dass das Fahrzeug abgestellt wurde, wird in Schritt 120 eine zeitliche Abfolge von Signalen des mindestens einen Radarsensors erfasst.

Anschließend wird in Schritt 130 geprüft, ob die Standardabweichung der Signalzeitfolge akzeptabel ist, insbesondere einen vorgegebenen tolerierbaren Maximalwert nicht überschreitet. Die Standardabweichung ist ein Maß dafür, ob eine repräsentative Folge von Signalwerten erfasst wurde. Insbesondere kurz nach dem Anhalten können Effekte in der Umgebung des Fahrzeugs, z.B. aufgewirbelter Staub, zu Schwankungen der Signale führen. Die Prüfung der Standardabweichung stellt sicher, dass eine Referenzwertbildung erst dann erfolgt, wenn die erfassten Werte stabil genug sind. Die Prüfung auf ausreichende Stabilität kann auch ohne Berechnung der Standardabweichung, z.B. durch Wertvergleiche erreicht werden. Wurde eine Folge von Signalwerten des Radarsensors erfasst, bei der die Standardabweichung einen akzeptablen Wert hat, wird in Schritt 140 ein Mittelwert der Signalfolge als Referenzwert gespeichert. Dieser Referenzwert wird dann zur Korrektur der Sensorsignale bei der Detektion eines Betriebsvorgangs verwendet.

In Schritt 150 werden Sensorsignale des mindestens einen Radarsensors erfasst und in Schritt 160 mit dem Referenzwert korrigiert. Der Referenzwert wird dabei z.B. als Offsetwert berücksichtigt. In Schritt 170 wird überprüft, ob die korrigierten Sensorsignale eine Betätigung anzeigen, wobei als Kriterium beispielsweise eine Schwellwertüberschreitung oder ein bestimmtes Zeitverhalten der Signale des Radarsensors herangezogen wird. Wird keine Betätigung erkannt, wird zu Schritt 150 zurückgekehrt. Wird hingegen anhand der korrigierten Sensorsignale ein Betrieb erkannt, wird in Schritt 180 ein Betriebssignal ausgegeben.

Wie oben beschrieben, kann die Auslösung der Referenzwerterfassung nach zeitlichen Kriterien erfolgen, z.B. periodisch oder in Abhängigkeit von bestimmten Ereignissen. Auch eine Kombination dieser Verfahren ist sinnvoll. Als auslösende Ereignisse können alle am Fahrzeug erfassbaren Zustandsänderungen oder auch explizite Auslösebefehle, beispielsweise von einer zentralen Steuereinheit, dienen.

Der Einsatz der erfindungsgemäßen Vorrichtung ist weiterhin nicht auf die Erfassung von Betätigungen im Heckbereich, also als Kicksensor, beschränkt. Auch Sensoren in anderen Bereichen der Außenhaut, also in Bereichen, die wechselnde Umgebungsbedingungen aufweisen, profitieren von der Erfindung. Werden beispielsweise Radarsensoren im Seitenbereich eines Fahrzeugs eingesetzt, um eine Betätigung durch den Benutzer in Abhängigkeit von der Annäherung des Benutzers selbst oder eines seiner Körperteile zu erkennen, so kann auch hier die Referenzwertbildung helfen. So sind z.B. beim Abstellen eines Fahrzeuges in einer Parkgarage im Gegensatz zum Abstellen eines Fahrzeuges auf einer Freifläche umgebende Objekte vorhanden, die einen großen Einfluss auf die Signalantwort der Radarsensoren haben. Wird auch hier eine Referenzwertbildung in Abhängigkeit vom Abstellen des Fahrzeugs durchgeführt, können auch in solchen Situationen Fehlerkennungen vermieden werden.

## Patentansprüche

1. Vorrichtung zur Erfassung von Bedienhandlungen einer Bedienperson an einem Kraftfahrzeug (1), wobei die Vorrichtung zur Montage an einem Fahrzeug ausgebildet ist, mit wenigstens einer Sensoranordnung, die wenigstens einen Radarsensor (5) aufweist,
mit einer Auswerteeinrichtung, welche ausgebildet ist, Signale des wenigstens einen Radarsensors (5) zu erfassen und in Abhängigkeit von einer Auswertung der Signale ein Bediensignal an einem Signalausgang auszugeben,
**dadurch gekennzeichnet,**
**dass** die Auswerteeinrichtung ausgebildet ist, aus einer Mehrzahl von Signalen des Radarsensors (5) der Sensoranordnung einen Referenzwert zu erzeugen und zu speichern,
wobei die Auswerteeinrichtung weiterhin dazu ausgebildet ist, bei der Auswertung der Signale des Radarsensors (5) der Sensoranordnung in Abhängigkeit von einer Abweichung von Signalen des Radarsensors von einem der gespeicherten Referenzwerte ein Ansteuersignal zu erzeugen.

2. Vorrichtung nach Anspruch 1, wobei die Auswerteeinrichtung ausgebildet ist, den Referenzwert als Offset-Wert bei der Auswertung der Signale des Radarsensors (5) der Sensoranordnung zu berücksichtigen.

3. Vorrichtung nach einem der vorangehenden Ansprüche, wobei die Auswerteeinrichtung ausgebildet ist, den Referenzwert aus einer Mehrzahl, zeitlich nacheinander erfasster Signale des Radarsensors zu erzeugen, insbesondere durch Mittelwertbildung oder gewichtete Mittelwertbildung.

4. Vorrichtung nach Anspruch 3, wobei die Auswerteeinrichtung ausgebildet ist, um einen Referenzwert periodisch oder kontinuierlich als gleitenden Durchschnitt von Sensorsignalen des Radarsensors zu erzeugen.

5. Vorrichtung nach einem der vorangehenden Ansprüche, wobei der Radarsensor derart mit der Vorrichtung gekoppelt ist, dass er nach Montage an einem Fahrzeug auf den Untergrund des Fahrzeugs gerichtet ist.

6. Vorrichtung nach einem der vorangehenden Ansprüche, wobei die Auswerteeinrichtung einen Signaleingang für ein Betriebszustandssignal aufweist, welches charakteristisch für den Betriebszustand eines Fahrzeuges ist, in welchem die Vorrichtung installierbar ist, wobei die Auswerteeinrichtung ausgebildet ist, einen Referenzwert in Abhängigkeit von dem Betriebszustandssignal zu erzeugen.

7. Vorrichtung nach Anspruch 6, wobei die Auswerteeinrichtung ausgebildet ist, einen Referenzwert zu erzeugen, wenn das Betriebszustandssignal eine Bewegung des Fahrzeugeses anzeigt, in welchem die Vorrichtung installierbar ist.

8. Vorrichtung nach Anspruch 6 oder 7, wobei die Auswerteeinrichtung ausgebildet ist, einen Referenzwert zu erzeugen, wenn das Betriebszustandssignal ein Anhalten des Fahrzeugeses anzeigt, in welchem die Vorrichtung installierbar ist.

9. Verfahren zur Erfassung von Bedienhandlungen einer Bedienperson an einem Kraftfahrzeug, wobei mit wenigstens einem Radarsensor ein Signal erfasst wird,
wobei das Radarsignal ausgewertet wird und dann, wenn das Radarsignal vorgegebene Kriterien erfüllt, ein Bediensignal an eine Fahrzeugsteuerung ausgegeben wird,
**dadurch gekennzeichnet,**
**dass** aus den Signalen des Radarsensors in zeitlichen Abständen wiederholt oder getriggert ein Referenzwert erzeugt und gespeichert wird,
wobei der Referenzwert bei der Auswertung der Signale und dem Vergleich mit den vorgegebenen Kriterien berücksichtigt wird.

10. Verfahren nach Anspruch 9, wobei der Referenzwert als Offset-Wert bei der Auswertung der Signale des Radarsensors der Sensoranordnung berücksichtigt wird.

11. Verfahren nach Anspruch 9 oder 10, wobei der Referenzwert aus einer Mehrzahl, zeitlich nacheinander erfasster Signale des Radarsensors erzeugt wird, insbesondere durch Mittelwertbildung oder gewichtete Mittelwertbildung.

12. Verfahren nach Anspruch 9 bis 11, wobei der Referenzwert periodisch oder kontinuierlich als gleitender Durchschnitt von Sensorsignalen des Radarsensors gebildet wird.

13. Verfahren nach Anspruch 9 bis 12, wobei der Radarsensor bei der Montage an einem Fahrzeug auf den Untergrund des Fahrzeugs gerichtet wird.

14. Verfahren nach Anspruch 9 bis 13, wobei in Abhängigkeit von einem Betriebszustandssignal, welches charakteristisch für den Fahrzustand eines Fahrzeuges ist, der Referenzwert in Abhängigkeit von dem Betriebszustandssignal erzeugt wird.

15. Verfahren nach Anspruch 9 bis 14, wobei der Referenzwert erzeugt wird, wenn das Betriebszustandssignal eine Bewegung des Fahrzeugeses anzeigt.

16. Verfahren nach Anspruch 9 bis 15, wobei der Referenzwert erzeugt wird, wenn das Betriebszustandssignal ein Anhalten des Fahrzeugeses anzeigt.
